(19) Europäisches Patentamt
European Patent Office
Office européen des brevets

(11) Veröffentlichungsnummer: **0 275 937**
**A2**

(12) # EUROPÄISCHE PATENTANMELDUNG

(21) Anmeldenummer: **88100505.2**

(51) Int. Cl.⁴: **C09J 3/00** , C08K 5/00

(22) Anmeldetag: **15.01.88**

(30) Priorität: **23.01.87 DE 3701920**

(43) Veröffentlichungstag der Anmeldung:
**27.07.88 Patentblatt 88/30**

(84) Benannte Vertragsstaaten:
**AT BE DE FR GB NL**

(71) Anmelder: **Henkel Kommanditgesellschaft auf Aktien**
**Postfach 1100 Henkelstrasse 67**
**D-4000 Düsseldorf-Holthausen(DE)**

(72) Erfinder: **Hoffmann, Heinz-Peter**
**Reisholzer Strasse 19**
**D-4000 Düsseldorf 1(DE)**
Erfinder: **Eberhardt, Werner**
**Am Sonnenhang 1**
**D-5653 Leichlingen 2(DE)**
Erfinder: **Werner, Jürgen, Dr.**
**Siegfriedstrasse 21**
**D-4000 Düsseldorf 11(DE)**

(54) **Tapetenkleber.**

(57) Verwendung von optischen Aufhellern in wässrigen Tapetenklebern zur Verhinderung bzw. Verminderung von Verfärbungen an mittels dieser Klebstoffe angebrachten Tapeten, wobei die optischen Aufheller in einer Menge von 0,05 bis 3 Gew.-%, bezogen auf das Trockengewicht der klebenden Substanz eingesetzt werden.

EP 0 275 937 A2

## "Tapetenkleber"

Die vorliegende Erfindung bezieht sich auf wässrige Tapetenkleber, bei denen die Neigung zu Gelbverfärbung der aufgeklebten Tapeten bzw. ähnlichen Wandbelagsstoffen vermindert ist.

Tapeten und andere Wandbelagsklebstoffe werden je nach vorgegebenen Bedingungen mit sogenannten Tapetenkleistern, bestehend aus wässrigen Lösungen von Hydrokolloiden wie Methylcellulose, Methylhydroxypropylcellulose oder aber wasserlöslichen Stärkederivaten, verklebt. Weiterhin werden häufig wässrige Dispersionen von filmbildenen Hochmolekularen wie Polyvinylacetat für diesen Zweck eingesetzt, meist in Verbindung mit den vorstehend erwähnten Cellulose-und Stärkederivaten.

Insbesondere in neuerer Zeit wird beobachtet, daß bei Anwendung dieser, lange zum Stand der Technik gehörenden Kleister sich nach dem Trocknen Verfärbungen, insbesondere Gelbverfärbungen, auf den verklebten Tapeten zeigen. Diese unter Umständen schon nach Tagen, meist aber erst nach Wochen und Monaten, auftretenden Verfärbungen könnten dadurch erklärt werden, daß bestimmte in der Wand vorhandene Substanzen beim Trockenvorgang an die Oberfläche der Tapete transportiert werden. Da es nun nicht möglich ist, jeweils den zu beklebenden Untergrund so vorzubereiten, daß auf keinen Fall derartige, eine Verfärbung auslösende Substanzen an die Oberfläche der Tapete transportiert werden, bestand ein dringendes Bedürfnis, dem wässrigen Klebstoff selbst eine eine solche Verfärbung verhindernde Substanz zuzugeben.

Die Auswahl einer solchen Verbindung bereitet insofern Schwierigkeiten, als man den eigentlichen Grund für das Auftreten von Verfärbungen auf aufgeklebten Tapeten nicht kennt, und daß wahrscheinlich auch nicht nur eine sondern verschiedenartige chemische Verbindungen Anlass für dieses unerwünschte Phänomen sein können.

Überraschenderweise wurde nun gefunden, daß bei der Verwendung von optischen Aufhellern in wässrigen Tapetenklebern die Neigung zur Ausbildung von Verfärbungen an den Oberflächen der Tapeten vermindert bzw. verhindert werden kann.

Der Zusatz von optischen Aufhellern zu Klebstoffen der verschiedensten Art ist seit langem bekannt. So hat man bereits vor vielen Jahren empfohlen, optische Aufheller Klebstoffen zuzusetzen, um nach erfolgter Verklebung durch optische Prüfung feststellen zu können, ob eine Klebefuge tatsächlich mit dem Klebstoff vollständig gefüllt war, inwieweit Fehlstellen vorhanden waren und ob tatsächlich ein besonders mit optischen Aufhellern gekennzeichneter Klebstoff eingesetzt worden war, oder ein anderer, der diesen kennzeichnenden Aufheller nicht enthielt. Von diesem Stand der Technik ausgehend, konnte natürlich keine Anregung erfolgen, die eingangs geschilderten Nachteile zu beseitigen. Auch der ursprüngliche Zweck der optischen Aufheller, nämlich in gewaschenen Textilstücken Vergrauungen nicht mehr sichtbar zu machen, konnte im vorliegenden Fall keine Anregung sein, handelt es sich doch bei dem zu lösenden Problem im Sinne der Erfindung nicht um Vergrauungen von Oberflächen, die nicht in unmittelbarem Kontakt mit der - verklebten - Unterseite stehen, sondern um Verfärbungen. Somit konnte nicht vorausgesagt werden, ob die optischen Aufheller überhaupt an der Oberfläche der Tapeten wirksam werden könnten, zumal sie als in den meisten Fällen praktisch wasserunlösliche Verbindung gar nicht an die Oberfläche der Tapete gelangen sollten.

Die optischen Aufheller werden in den wässrigen Tapetenkleistern zweckmäßig in einer Menge von 0,1 bis 5 Gew.-%, insbesondere 0,2 bis 2,5 Gew.-%, bezogen auf das Trockengewicht der klebenden Substanz, eingesetzt.

Die Basis für die wässrigen Tapetenklebstoffe sind in erster Linie Methylcellulose, Methylhydroxypropylcellulose, Hydroxyethylcellulose, Carboxymethylcellulose sowie die verschiedensten wasserlöslichen Celluloseether, weiterhin aufgeschlossene wasserlösliche Stärke oder Stärkeether wie Hydroxypropylstärke sowie Kombinationen der vorstehend erwähnten Rohstoffe. Nach einer besonderen Ausführungsform der wässrigen Klebstoffe für Tapeten enthalten diese zusätzlich mehr oder weniger große Mengen an filmbildenden, wasserunlöslichen thermoplastischen Polymerisaten, in erster Linie Polyvinylacetat bzw. Mischpolymerisate des Vinylacetates mit copolymerisierbaren Monomeren. In den meisten Fällen werden derartige Tapetenkleister in Trockenform dem Verbraucher zur Verfügung gestellt, wobei noch weitere Hilfsstoffe der Trockenmischung zugesetzt werden.

Die verwendbaren Aufheller können Derivat der Aminostilbensulfonsäure bzw. der Diaminostilbendisulfonsäure, der Diarylpyrazoline, des Carbostryrils, des 1,2-Di-(2-benzoxyzolyl)-oder 1,2-Di-(2-benzimidazolyly)-äthylens, des Benzoxyzolylthiophens und des Cumarins sein.

Beispiele für Aufheller aus der Klasse der Diaminostilbendisulfonsäurederivate sind Verbindungen gemäß Formel I:

I: 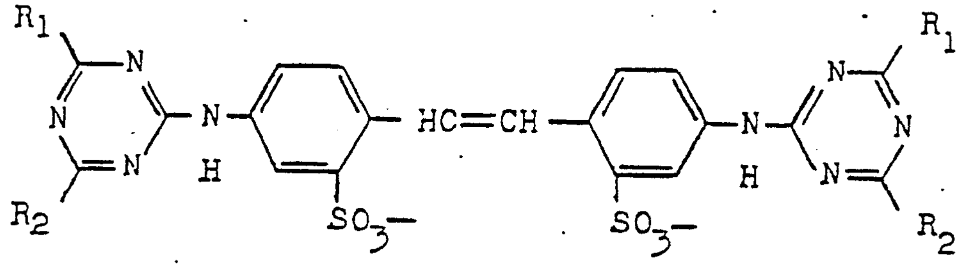

In der Formel können $R_1$ und $R_2$ Alkoxylgruppen, die Aminogruppe oder Reste aliphatischer, aromatischer oder heterocyclischer, primärer oder sekundärer Amine sowie Reste von Aminosulfonsäuren bedeuten, wobei in den obigen Gruppen vorhandene aliphatische Reste bevorzugt 1 - 4 und insbesondere 2 - 4 C-Atome enthalten, während es sich bei den heterocyclischen Ringsystemen meist um 5-oder 6-gliedrige Ringe handelt. Als aromatische Amine kommen bevorzugt die Reste des Anilins, der Anthranilsäure oder der Anilinsulfonsäure infrage. Es sind die folgenden, von der Formel I abgeleiteten Produkte im Handel, wobei $R_1$ den Rest $-NHC_6H_5$-Anilins darstellt und $R_2$ folgende Reste bedeuten kann:
$-NH_2$, $-NHCH_3$, $-NHCH_2CH_2OH$-, $-NHCH_2Ch_2OCH_3$, $-NHCH_2CH_2OCH_3$, $-N(CH_3)CH_2CH_2OH$, $-N(CH_2CH_2OH)_2$, Morpholino-, $-NHC_6H_5$, - $NHC_6H_4SO_3H$, $-OCH_3$.

Vom Typ der Diarylpyrazoline sind Verbindungen der Formel II und III brauchbar:

II: 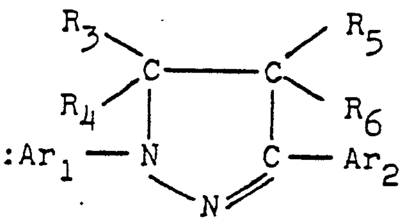 III: 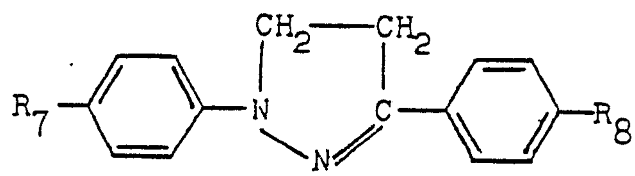

In der Formel II bedeuten $R_3$ und $R_5$ Wasserstoffatome, gegebenenfalls durch Carboxyl-, Carbonamid-oder Estergruppen substituierte Alkyl-oder Arylreste, $R_4$ und $R_6$ Wasserstoff oder kurzkettige Alkylreste, $Ar_1$ sowie $Ar_2$ Arylreste, wie Phenyl, Diphenyl oder Naphthyl, die weitere Substituenten tragen können, wie Hydroxy-, Alkoxy-, Hadroxylakyl-, Amino-, Alkylamino-, Acylamino-, Carboxyl-, Carbonsäureester-, Sulfonsäure-, Sufonamid-und Sulfongruppen oder Halogenatome. Im Handel befindliche Aufheller dieses Typs leiten sich von der Formel III ab, wobei der Rest $R_7$ die Gruppen C1, $-SO_2NH_2$, $-SO_2CH=CH_2$ und $-COOCH_2CH_2OCH_3$ darstellen kann, während der Rest $R_8$ meist ein Chloratom bedeutet. Auch das 9-Cynoanthracen kann eingesetzt werden.

Ferner sind geeignete Aufheller aliphatisch oder aromatisch substituierte Aminocumarine, wie z.B. 4-Methyl-7-dimethyl-amino-oder 4-Methyl-7-diäthylaminocumarin. Weiterhin sind als Aufheller Verbindungen wie 1-(2-Benzimidazolyl)-2-(1-hadroxyäthyl-2-benzimidazolyl)-äthylen und 1-Äthyl-3-phenyl-7-diäthylamino-carbostyril, 2,5-Di-(2-benzoxazolyl)-thiophen, 2-(2-Benzoxazolyl)-naphtho -2,3-b thiophen und 1,2-Di-(5-methyl-2-benzoxazolyl)-äthylen geeignet. Schließlich werden gute Resultate erhalten mit substituierten 4,4'-Distyryldiphenylen wie 4,4'-Bis-(2-sulfostyrol)-diphenyl oder 4,4'-Bis(4-chlor-3-sulfostyryl)-diphenyl.

Geeignete handelsübliche optische Aufheller haben Absorptionsmaxima im Bereich von etwa 250 bis 360 nm. Sie emittiern im Bereich von etwa 400 bis 480 nm.

Im vorliegenden Fall hat es sich als besonders günstig erwiesen, weitere Hilfsstoffe wie Polyphosphate wie Natriumtripolyphosphat oder auch Natriumaluminiumsilikat sowie Komplexbildner wie Ethylendiamintetraessigsäure oder Nitrilotriessigsäure in Form des Natriumsalzes zuzugeben. Dadurch kann zusätzlich die Wirkung von Schwermetallionen, die eventuell auch an einem Verfärbungseffekt beteiligt sind, zurückgedrängt werden.

Beispiele

Es wurden verschiedene Tapetenkleber nachstehender Zusammensetzung eingesetzt:

1) 500 g Methylcellulose (300 m·Pas in 2 %iger wässriger Lösung, Methoxylgehalt 26 %)
350 g PVAcetat-Redispersionspulver
60 g Kaolin
50 g Cellulosepulver
10 g Additionsprodukt von 6 Mol Ethylenoxid an 1 Mol Nonylphenol
8 g handelsüblicher Konservierungsstoff (Basis Isothiazolinderivat)

2) 680 g Methylcellulose (5000 m·Pas in 2 % wässrige Lösung, Methoxylgehalt (19 %)
300 g Carboxylmethylstärke (DS 0,22)
15 g Additionsprodukt von 4 Mol Ethylenoxid an 1 Mol Fettalkohol
10 g handelsüblicher Konservierungsstoff (Basis Isothiazolinderivat)

3) 500 g handelsübliche Polyvinylacetatdispersionen (50% Feststoffgehalt)
200 g Wasser
20 g Methylcellulose (3000 m·Pas in 2 % wässriger Lösung)
10 g handelsübliches Konservierungsmittel

Die vorstehenden Mischungen wurden dann mit
a) 0,5 b) 1,0 c) 1,5 Gew.-% (bezogen auf vorliegende Mischung) der beiden optischen Aufheller
- 4,4'Bis(2-sulfostyryl)-diphenyl
- diaminolstilbenderivat gemäß Formel I, wobei $R_1$ = Anilino und $R_2$ = Morpholino
versetzt.

Die erhaltenen Mischungen wurden mit Wasser im Verhältnis 1 : 20 (1) oder 1 : 25 (2) oder 1 : 1 (3) angerührt und zum Aufkleben von handelsüblichen Tapeten auf unvorbehandelte Wandflächen, von denen zuvor durch Einweichen mit Wasser und mechanische Bearbeitung alte Wandbeläge entfernt worden waren, benutzt. Nach 3-tägigem Auftrocknen wurden die Räume, in denen die Probeverklebungen vorgenommen worden waren, auf 45 °C weitere 5 Tage bei 90 % relativ Luftfeuchtigkeit belassen. Es konnten keinerlei Farbveränderungen beobachtet werden, wie sie sonst bei solcher Belastung häufig auftreten.

**Ansprüche**

1. Verwendung von optischen Aufhellern in wässrigen Tapetenklebern zur Verhinderung bzw. Verminderung von Verfärbungen an mittels dieser Klebstoffe angebrachten Tapeten.

2. Verwendung von optischen Aufhellern in wässrigen Tapetenklebern gemäß Anspruch 1 in einer Menge von 0,05 bis 3 Gew.-%, insbesondere 0,1 bis 2,5 Gew.-%, bezogen auf das Trockengewicht der klebenden Substanz.

3. Verwendung von optischen Aufhellern gemäß Ansprüchen 1 und 2, dadurch gekennzeichnet, daß man optische Aufheller aus der Reihe der Stilbenverbindungen auswählt.

4. Verwendung von optischen Aufhellern gemäß Patentansprüchen 1 bis 3, dadurch gekennzeichnet, daß man zusätzlich 0,02 bis 5 % an Komplexbildnern und/oder Alkalipolyphosphat und/oder Natriumaluminiumsilikat zusetzt.